(19) Europäisches Patentamt

European Patent Office

Office européen des brevets

(11) Veröffentlichungsnummer: **0 178 490 B1**

(12) **EUROPÄISCHE PATENTSCHRIFT**

(45) Veröffentlichungstag der Patentschrift: **21.11.91**

(21) Anmeldenummer: **85111982.6**

(22) Anmeldetag: **21.09.85**

(51) Int. Cl.⁵: **G01N 1/24**, G01T 7/04

(54) **Vorrichtung zur Erfassung von ausfilterbaren Gaskontaminationen.**

(30) Priorität: **06.10.84 DE 3436800**

(43) Veröffentlichungstag der Anmeldung:
**23.04.86 Patentblatt 86/17**

(45) Bekanntmachung des Hinweises auf die
Patenterteilung:
**21.11.91 Patentblatt 91/47**

(84) Benannte Vertragsstaaten:
**DE FR GB**

(56) Entgegenhaltungen:
**DE-A- 1 108 818
DE-A- 1 214 024
US-A- 3 540 261
US-A- 4 304 994**

(73) Patentinhaber: **Forschungszentrum Jülich
GmbH
Postfach 1913
W-5170 Jülich(DE)**

(72) Erfinder: **Keller, Manfred, Dr.
Ginsterweg 10
W-5170 Jülich(DE)**

EP 0 178 490 B1

**Beschreibung**

Die Erfindung bezieht sich auf eine Vorrichtung zur Erfassung von ausfiltrierbaren Gaskontaminationen mit einer mittels eines horizontalen kompakten Drehtellers über einen Saugkopf mit Pompenanschluß bewegten kreisringförmigen Filterbahn.

Eine solche Vorrichtung ist aus der DE-AS 1 108 818 bekannt, bei der jedoch Vorschubprobleme insbesondere bei relativ dünnen Filterscheiben bestehen.

Der Nachweis von Verunreinigungen in Gasen, insbesondere von Schadstoffen in Luft, ist seit längerer Zeit wichtig und gewinnt zunehmend an Bedeutung. Dabei lassen sich viele Kontaminationen aus der Luft ausfiltern, indem sie, wie Aerosole oder Stäube, durch ein entsprechendes Filter "ausgesiebt" oder durch insbesondere sorptive Anlagerung an Sorptionsmittel, wie Aktivkohle oder Zeolith, aufgesammelt werden. Der Nachweis des am Filter oder Sorptionsmittel angreicherten Schadstoffs kann auf chemischem Wege oder insbesondere durch eine physikalischchemische Analysentechnik wie durch Fluoreszenzanalyse o.dgl. erfolgen.

Im Bereich der Radioaktivitätskontrolle spielt eine solche Erfassung von Luftverunreinigungen eine ganz besondere Rolle, deren empfindlicher Nachweis über die ausgesandte Strahlung mit entsprechenden strahlungsempfindlichen Detektoren möglich ist.

Aus der US-A-4304994 ist bekannt eine Anordnung zur Erfassung spezieller Radioisotope und insbesondere von $^{131}$Jod in Gaskreisen, bei der im wesentlichen nach Art eines Probenwechslers auf einem Drehteller angeordnete Patronen mit speziellem Absorber (z.B. Silber(verbindungen) für Jod) nacheinander mit Gas beaufschlagt und dann einem winkelversetzt angeordneten Detektor zugeleitet werden. Solche Anordnungen eignen sich im wesentlichen für die Erfassung von $\gamma$ - Strahlern, während z.B. schwache ß-Strahler und $\propto$ -Strahler auf diese Weise schlecht nachzuweisen sind.

Es gibt daher bereits Vorrichtungen zur Erfassung radioaktiver Stäube und Aerosole, bei denen ein über Rollen laufendes bandförmiges Filter über eine gasdurchlässige Unterlage schrittweise gezogen wird, die jeweils nach Abschluß der Vorschubbewegung mit einem Saugsystem verbunden wird. Eine entsprechende Vorrichtung mit konstantem Vorschub ist aus der DE-AS 1 147 326 zu entnehmen. Der Aufbau dieser bekannten Geräte ist relativ kompliziert und ihre Arbeitsweise nicht voll zufriedenstellend.

Ziel der Erfindung ist daher eine Vorrichtung zur Erfassung ausfilterbarer Gaskontaminationen, die möglichst einfach und verläßlich arbeitet, Variationsmöglichkeiten bietet und insbesondere auch längeren ununterbrochen durchzuführenden Meßaufgaben angepaßt ist, die wartungsfrei bewältigt werden können.

Die zu diesem Zweck entwickelte erfindungsgemäße Vorrichtung der eingangs genannten Art ist dadurch gekennzeichnet, daß der kompakte Drehteller das gesamte, die Kontamination aufsammelnde Filter unterstützt und längs der kreisringförmigen Bahn mit Löchern bzw. Bohrungen versehen ist, die mit der Lippenform des Saugkopfes zusammenwirken, der mittels einer Ausrichtungsfehler der Dichtflächen ausgleichenden Federlagerung gegen die planparallele Unterseite des Drehtellers angedrückt wird.

Bei einem solchen horizontalen Drehteller mit Filterauflage (nachfolgend als Drehfilter bezeichnet) mit von unten (durch eine "Ausgleichslagerung") federnd angedrücktem Saugkopf wird die Arbeitsweise erheblich erleichtert, da sowohl kontinuierlicher als auch schrittweiser Vorschub des Filters möglich sind, wobei auch im letzteren Falle keine Trennung vom Pumpsystem notwendig ist. Besonders wichtig ist, daß bei der erfindungsgemäßen Anordnung die Fortbewegung des Filtermittels stets nur gemeinsam mit der Unterlage erfolgt, das so selbst keinen Zugkräften unterliegt.

D.h., der Drehteller Kann durch Motorbetrieb kontinuierlich gedreht oder insbesondere mit einem Schrittmotor schrittweise fortbewegt werden. Man erreicht einen solchen schrittweisen Vorschub z.B. mittels eines Hubmagneten, der einen Mitnehmer betätigt, der in einen mit dem Drehteller fest verbundenen Zahnkranz eingreift und diesen um einen bestimmten Winkel weiterbewegt. Alternativ kann der Schrittvorschub auch mit Hilfe von Lochplatten und Lichtschranken gesteuert werden.

Die am Drehteller vorgesehenen Löcher oder Bohrungen, die mit dem Saugkopf zusammenwirken, werden vorzugsweise durch einen Kranz eng benachbarter, allgemein ovaler Radialschlitze gebildet, die nach unten zu verjüngt sind. Der Saugkopf hat dann einen dem unteren Schlitzquerschnitt entsprechenden, vorzugsweise geringfügig größeren Radialschlitz innerhalb einer relativ breiten Sauglippe . Um die Reibungskraft zwischen Drehteller und Saugkopf gering zu halten, eignen sich Materialien wie Plexiglas® (Polymethacrylat) oder Polytetrafluoräthylen. Um ein sicheres Anliegen des Saugkopfes an

Die Sammelplatzkapazität (entsprechend der Zahl der Radialschlitze) eines solchen Filters ist relativ groß und ermöglicht einen Dauerbetrieb über lange Zeiten hinweg, wobei insbesondere zwei Drehfilter nebeneinander in einer Vorrichtung vorgesehen werden, die abwechselnd arbeiten können.

Zur genauen Bestimmung der in der Regel aus mehreren Komponenten zusammengesetzten Schadstoffe sind u.a. unterschiedliche Detektoren oder bei radioaktiven Gemischen zusätzlich zeitversetzte Messungen erforderlich. Eine solche Sammel- und Meßeinrichtung ist daher vorzugsweise mit mehreren Detektoren auszustatten, die wegen ihres Raumbedarfs untereinander winkelversetzt über dem Drehfilter angeordnet werden. Umfaßt die Sammeleinrichtung z.B. einen ersten Detektor, mit dem bereits während der Probennahme und einen zweiten Detektor, mit dem unmittelbar nach der Probenahme der Schadstoffgehalt zu messen ist, so kann bei einem Vorschub des Drehfilters um einen (schmalen) Sammelplatz dieser Detektor nach der Probenahme nicht unmittelbar erreicht werden. Vorzugsweise ist daher ein Programmvorschub über eine entsprechende Anzahl von Sammelplätzen vorgesehen, der eine aufgesammelte Probe anschließend unmittelbar unter diesen Detektor bringt.

Um trotzdem ein auf den Drehteller aufgebrachtes Meßfilter maximal ausnutzen zu können, wird eine Anzahl von Bohrungen bwz. Schlitzzahl n im Drehteller vorgesehen,
die gleich $z.\Delta n + 1$ bzw. $z.\Delta n - 1$ ist, wobei $\Delta n$ die Entfernung zwischen Sammelplatz und Detektor (in Schlitzzahl gemessen) und $z$ die Zahl der Probennahmen je Tellerumlauf bedeutet. Dabei wird zusätzlich gefordert, daß $n + 1$ bzw. $n - 1$ keine Primzahl ist.

Mit einer solchen Anordnung wird bei festem Vorschubprogramm die Filterfläche maximal ausgenutzt, da der Ort der Probennahme je Tellerumlauf uni einen Probennahmeplatz fortschreitet bzw. zurückversetzt ist.

Als Detektor zur Bestimmung ausfilterbarer radioaktiver Luftverunreinigungen kommen die üblichen Strahlungsmeßsonden, wie Geiger-MüllerZähler, Proportionalzähler, Szintillationsdetektoren oder Halbleiterdetektoren in Betracht. Von diesen können mehrere Detektoren winkelversetzt über dem Filter vorgesehen sein in einem Abstand, der dem Drehtellervorschub zwischen zwei Probennahmen (oder einem ganzzahligen Vielfachen davon) entspricht. Durch solche zusätzlichen Detektoren kann eine Aussage über die Lang- oder Kurzlebigkeit der aufgesammelten radioaktiven Stoffe und/oder die Energie der ausgesandten Strahlung gewonnen werden.

Nichtradioaktive Sammelproben können beispielsweise über ihr Fluoreszenzverhalten o.dgl. analysiert werden.

Das auf dem Drehteller vorgesehene Luftfilter bzw. Meßfilter kann ein für die Aufsammlung von Aerosolteilchen geeignetes Glasfaserpapier oder Membranfilter sein. Alternativ können Filterscheiben mit selektiver Sammelkapazität vorgesehen werden. Für die Erfassung von Verunreinigungen, die durch Sorption, z.B. an Granulaten wie Aktivkohle oder Silber-Zeolith, angereichert werden können, kann der Drehteller mit einem Aufsatz mit napfbildenden Bohrungen versehen sein, die mit den Bohrungen des Drehtellers fluchten und deren durchlässiger Boden durch die Filterauflage des Drehtellers gebildet wird.

Um ein Ansaugen von Nebenluft durch das Filter zu verhindern, sind die Drehteller vorzugsweise in einem luftdichten Gehäuse untergebracht, das eine Einlaßöffnung und mit dieser verbunden eine Rohr- oder Schlauchleitung und insbesondere Leithaube über dem Saugkopf hat. Ein solches Gehäuse hat zwei Drehfilter-Anordnungen und für jedes Drehfilter eine eigene Kammer, in der das Drehfilter auf Schienen herausziehbar montiert ist.

Bei einer solchen Zwillingsanordnung von zwei Drehfiltern kann ggf. ein gemeinsames Pumpsystem vorgesehen sein, von dem über einen Zweiwegehahn die beiden Saugköpfe abzweigen.

Nachfolgend wird die Erfindung anhand von Ausführungsbeispielen unter Bezugnahme auf die angefügten Zeichnungen beschrieben; es zeigen schematisch

| | |
|---|---|
| Figur 1 | eine Drehfilter-Zwillingsanordnung gemäß der Erfindung in einem Zweikammergehäuse; |
| Figur 2 | die Lagerung des Saugkopfes unter dem Drehteller und einen unmittelbar über der Sammelstelle angeordneten Detektor; |
| Figur 3 | eine Detektoranordnung; |
| Figur 4 bis 6 | Anordnung für das Aufsammeln von Luftverunreinigungen an Sorptionsmaterial; und |
| Figur 7 bis 11 | Saugkopfvarianten und unterschiedliche Drehteller-Bohrungen. |

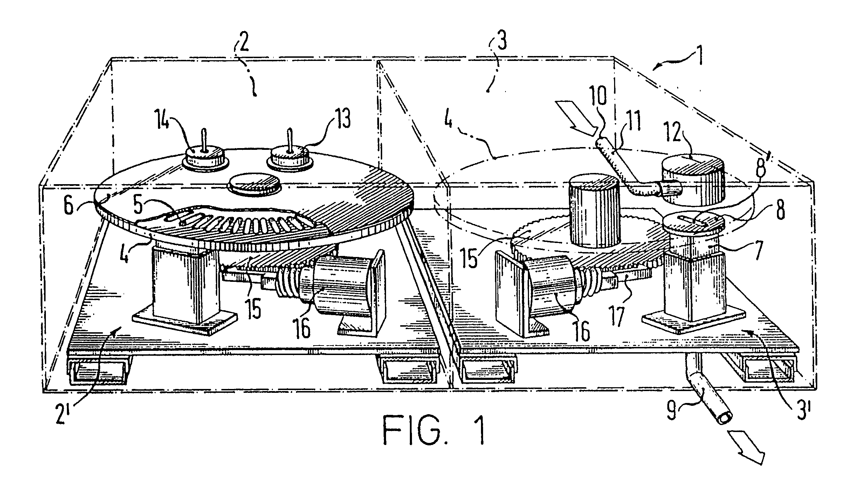

Wie aus Figur 1 hervorgeht, umfaßt das Gehäuse 1 zwei Kammern 2 und 3, in denen jeweils ein biegesteifer, ebener, ca. 10 mm dicker Drehteller 4 aus Plexiglas® oder Teflon® von 20 cm Durchmesser mit einem Kranz von Radialschlitzen 5 angeordnet ist, auf dem ein Aerosolfilter 6 aufliegt. Unter dem Drehteller 4 befindet sich ein Saugkopf 7 aus Teflon® mit Sauglippe 8 (mit Saugöffnung 8'), der über die Leitung 9 an ein nicht gezeigtes Saugsystem angeschlossen ist. Das zu filternde Gas bzw. die Luft wird über eine Gehäuseöffnung 10 angesaugt, die über eine Leitung 11 mit einer "Haube" 12 über dem Probennahmeplatz verbunden ist. Mit 13, 14 sind zwei Detektoren bezeichnet, die hier nicht weiter ausgeführt sind.

Der Drehteller 4 ist fest mit einem Zahnkranz 15 verbunden, der durch einen signalgesteuerten Hubmagneten 16 betätigt wird, welcher als Schiebeorgan einen in den Zahnkranz entsprechend eingreifenden Zahn oder Mitnehmer 17 aufweist.

Die Drehtelleranordnung ist auf einer auf Schienen gelagerten Grundplatte 2' bzw. 3' montiert und kann so zum Auswechseln des Filters zusammen mit den auf der Grundplatte montierten Hilfseinrichtungen nach vorn aus der mit einer abnehmbaren Frontplatte versehenen Kammer 2 bzw. 3 herausgezogen werden.

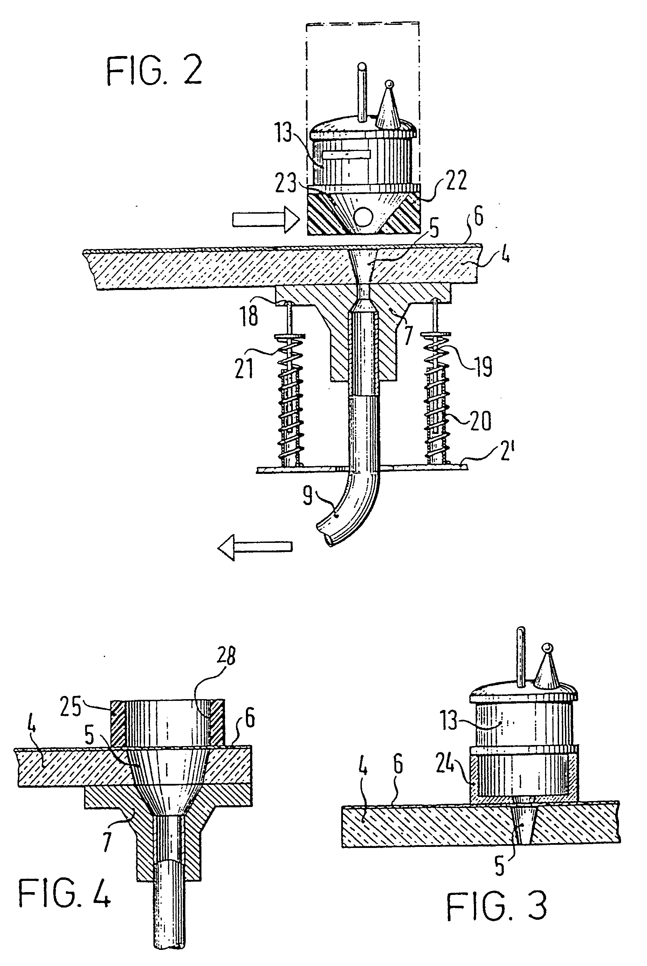

Figur 2 zeigt die "Ausgleichslagerung" des Saugkopfes 7, der an seiner Unterseite zwei Pfannen 18 aufweist, in welchen die Spitzen von Stiften 19 gelagert sind, welche in Führungshülsen 20 gleitend verschiebbar sind und in die Pfannen von Schraubenfedern 21 gedrückt werden, deren untere Enden um die Hülsen 20 gewickelt und auf der Grundplatte 2' gelagert und deren obere Enden an den Stiften 19 angeschlagen sind.

Figur 2 zeigt ferner die sich nach unten zu verjüngende konische Gestalt der Radialschlitze 5 sowie einen unmittelbar über der Sammelstelle angeordneten Detektor, der durch ein Endfensterzählrohr o.dgl. gebildet werden kann.

Zwischen dem Aerosolfilter 6 und dem Detektor 13 befindet sich eine blendenartig ausgebildete Luftführung 22 mit einer Bohrung 23, die mit der Leitung 11 verbunden sein kann und über welche die zu überwachende Luft (bzw. das Gas) unterhalb des Detektors zum Filter hin angesaugt werden kann.

Figur 3 zeigt die Anordnung eines Detektors 13 über einer zuvor auf dem Filter 6 aufgesammelten Probe. Bei dieser Anordnung befindet sich zwischen Filter und Detektor eine Blende 24, durch die eine Beeinflussung der Aktivitätsbestimmung der Sammelprobe durch Nachbarproben vermindert wird.

Figur 1 - 3 zeigen die erfindungsgemäße Anordnung mit Staub- oder Aerosolfilter. Alternativ kann jedoch auch über dem Saugkopf Sorptionsmaterial vorgesehen sein.

Am einfachsten kann dies mit Ringaufsätzen 25 realisiert werden, wie sie in Fig. 4 skizziert sind, die über die in diesem Falle kreisförmigen Bohrungen 5 des Drehtellers 4 nach Auflegen eines Filters 6 (Filterpapiers bzw. einer Filtermatte) aufgesetzt werden. Diese Ringe 25 mit "Bohrungen" 28 bilden dann mit dem Filter 6 als Boden Näpfe, in die Adsorbermaterial gefüllt werden kann.

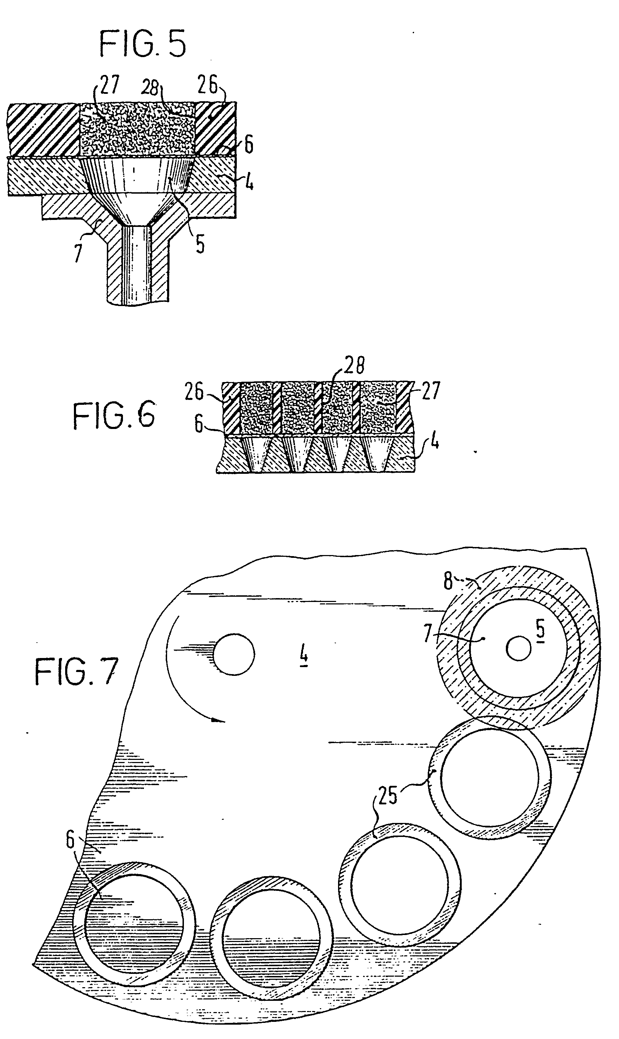

Zweckmäßiger als diese sehr einfache Ausführungsart ist die in Fig. 5 angedeutete Anordnung, bei der oberhalb des filterbelegten Drehtellers ein Drehfilteraufsatz 26 mit Bohrungen 28 mit Sorptionsmaterial 27 angeordnet ist, die den Bohrungen 5 des Drehtellers gegenüberstehen.

Eine zu Fig. 5 analoge Anordnung ist in Fig. 6 angedeutet, bei der die unter Mitverwendung des Filters 6 gebildeten napfartigen Ausnehmungen des Drehfilteraufsatzes 26 der Radialschlitzgestalt angepaßt sind.

Fig. 7 zeigt schematisch eine Aufsicht auf einen Drehteller 4 mit auf zylindrische Bohrungen 5 aufgesetzten Ringaufsätzen 25 über einem gestrichelt angedeuteten Saugkopf 7 mit Lippe 8.

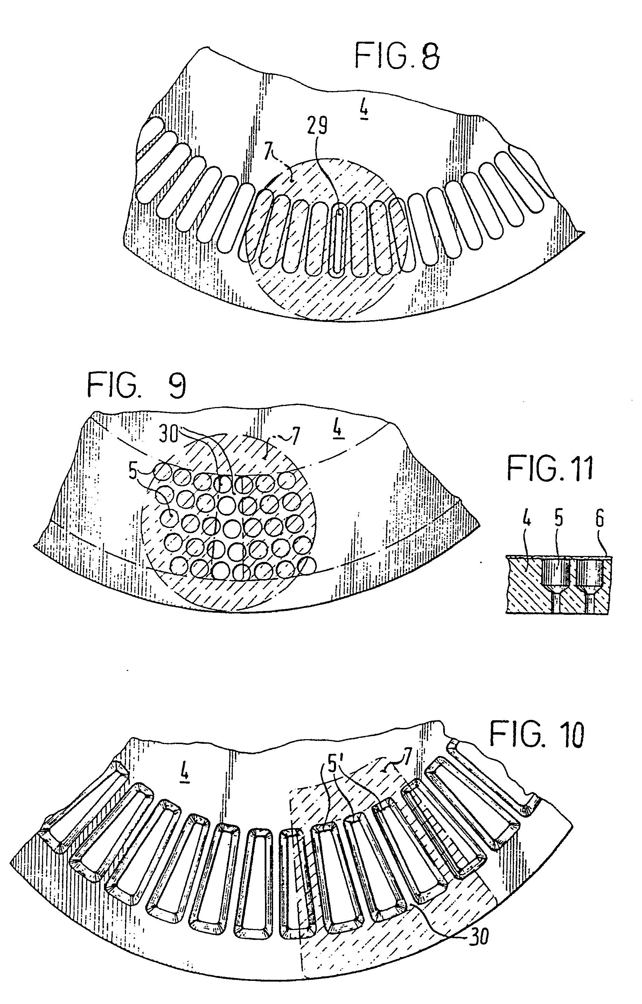

In Fig. 8 ist ein Drehteller mit Radialschlitzkranz angedeutet über einem Saugkopf 7 mit relativ breiter Lippe, dessen Saugöffnung 29 dem unteren verjüngten Querschnitt 5' (in den Zeichnungen meist weggelassen) des Radialschlitzes an der Unterseite des Drehtellers angepaßt ist.

In Fig. 8 ist eine Sauglippe von erheblicher Breite dargestellt. Üblicherweise wird man jedoch bestrebt sein, die Sauglippen nicht zu breit zu wählen, um Dichtprobleme zu vermeiden.

Gemäß Fig. 9 hat der Drehteller 4 in Umfangsnähe einen relativ breiten Kranz von kleinen zylindrischen Bohrungen oder Löchern, die, wie in Fig). 12 angedeutet ist, nach unten zu verjüngt sein können aber nicht müssen. Mit einem solchen Perforationskranz des Drehteller 4 wirkt ein Saugkopf 7 mit einer Saugöffnung 30 zusammen. Dieses Konzept ist im wesentlichen für eine langsame kontinuierliche Bewegung des Drehtellers vorgesehen.

Für eine kontinuierliche Bewegung des Drehtellers wäre auch die Anordnung gemäß Fig. 10 geeignet, bei der die Saugöffnung 30 des Saugkopfes 7 drei (oder mehr) Radialschlitze überdeckt und die Sauglippe breiter ist als der untere verjüngte Querschnitt der Radialschlitz-Bohrungen 5 des Drehtellers 4. Auch diese Anordnung eignet sich für quasi kontinuierliche Luftfilterung.

Eine Anordnung wie in Fig. 8 wurde, mit einem Glasfaserpapier-Aerosolfilter belegt, zum Nachweis radioaktiver Aerosol- und Staubteilchen verwendet, wobei jeweils Sammeldauern je Probenahmeplatz von 24 Stunden vorgesehen wurden.

Die Anordnung wurde mit untereinander entsprechend winkelversetzt angeordneten Endfenster-Zählrohren ausgerüstet und zwar: mit einem ersten Zählrohr auf Platz 1, welches die Aerosolaktivität bereits während der Probeaufnahme ermittelt, mit einem zweiten auf Platz 8 angeordneten Zählrohr, das nach Abschluß der Probenahme und Fortbewegung des Drehtellers um sieben Probenahmeplätze(für eine erneute Probenahme) mit der Messung beginnt und mit einem dritten Zählrohr auf Platz 43, mit dem die Aktivität nach weiteren fünf Tagen gemessen wird.

Mit der Weiterbewegung des Drehtellers für die nächste Probenahme mit Hilfe des Hubmagneten gelangt also ein um sieben Filterplätze versetzter Bereich des Filters über den Saugkopf.

Mit Silber-Zeolith-Sorptionsmittel wurde in der in Fig. 5 angedeuteten Art der Radiojodgehalt in der Umgebungsatmosphäre überwacht.

Zur frühzeitigen Erfassung sehr geringer Aerosolßeta-Aktivitätskonzentrationen "nicht natürlicher" (zivilisatorischer, anthropogener, künstlicher) Herkunft eignet sich besonders eine Anordnung mit 3 Detektoren bei denen der 1. Detektor unmittelbar über der Ansaugstelle angeordnet ist und der laufenden Überwachung dient. Dieser Detektor liefert insbesondere bei Störfällen die notwendige Sofortinformation.

Der 2. Detektor wird durch den Schrittvorschub nach Beendigung der Sammelperiode erreicht und liefert Daten über das anschließende Abklingverhalten, während mit dem 3. Detektor die am Meßort vorhandene langlebige Gesamt-BetaAktivitäts-Konzentration ermittelt wird.

Der Luftdurchsatz liegt zweckmäßigerweise bei 1 m³/h und als Taktzeit für den Schrittvorschub werden 1 bis 2 Tage gewählt.

Bei einem um jeweils zwei Plätze weiterrückenden Drehteller können die oben genannten Detektoren z.B. auf den Plätzen 1, 3 und 11 vorgesehen sein.

Als natürliche Aktivität, die der nicht natürlichen überlagert ist, sind bei Beta-Aktivitätsmessungen insbesondere RaB und ThB zu berücksichtigen, deren Verhältnis Witterungseinflüssen unterliegt. Unter Zugrundelegung der bekannten Halbwertzeiten dieser beiden natürlichen Isotope kann aus den ermittelten Abklingkurven unter Heranziehung entsprechender ThB-Kurven mittels eines Rechenprogramms eine Überlagerung durch künstliche Radioaktivität relativ empfindlich ermittelt werden.

Der Grundgedanke dieser Verfahrensweise besteht darin, aus dem von der Wetterlage abhängigen natürlichen RaB/ThB-Gemisch den kurzlebigen RaB-Anteil durch Abklingen lassen zu eliminieren. Nach etwa 2 bis 3 Stunden befindet sich in der Staubprobe praktisch nur noch der natürliche ThB-Anteil mit der bekannten Halbwertzeit von 10,6 h und die nachzuweisende unbekannte langlebige Aktivität nichtnatürlicher Herkunft.

Zur Optimierung der Auslegungsparameter sollte die Zeitdauer für die Abklinganalyse vorzugsweise 2 bis 4 Halbwertzeiten des ThB (T 1/2 = 10,6 h) - auf Tage bezogen also 1 bis 2 Tage - betragen. Damit wird erreicht, daß sich während der bei Schrittbetrieb gleichlangen Sammelzeit für ThB quasi ein Gleichgewichtszustand einstellt und dabei der RaB-Anteil (T 1/2 = 26,8 min) bereits relativ gering wird. Während der Abklinganalyse vergleicht ein entsprechend programmierter Rechner die laufend gemessenen Impulsraten n des Abklingvorganges mit dem bekannten Abklingverlauf 1n . n (ThB) = k .

$$\frac{0,693 \ t}{10,6}$$

von ThB. Auf diese Weise lassen sich langlebige Aerosole feststellen und die geforderte Nachweisempfindlichkeit realisieren.

## Patentansprüche

1. Vorrichtung zur Erfassung von ausfiltrierbaren Gaskontaminationen mit einer mittels eines horizontalen kompakten Drehtellers über einen Saugkopf mit Pumpenanschluß bewegten kreisringförmigen Filterbahn, **dadurch gekennzeichnet,** daß der kompakte Drehteller (4) das gesamte, die Kontamination aufsammelnde Filter (6) unterstützt und längs der kreisringförmigen Bahn mit Löchern bzw. Bohrungen (5) versehen ist, die mit der Lippenform des Saugkopfes (7) zusammenwirken, der mittels einer Ausrichtungsfehler der Dichtflächen ausgleichenden Federlagerung (18-21) gegen die planparallele Unterseite des Drehtellers (4) angedrückt wird.

2. Vorrichtung noch Anspruch 1, **dadurch gekennzeichnet,** daß die Löcher bzw. Bohrungen (5) durch einen Kranz eng benachbarter, nach unten zu verjüngter, abgerundeter Radialschlitze gebildet werden und daß die breite Sauglippe (8) des Saugkopfes (7) eine dem unteren Schlitzquerschnitt entsprechende, insbesondere geringfügig größere radialschlitzähnliche Saugöffnung (8', 29, 30) aufweist.

3. Vorrichtung nach Anspruch 1 oder 2, **dadurch gekennzeichnet,** daß der Drehteller (4) mit einem Zahnkranz (15) fest verbunden ist, der schrittweise mittels eines von einem Hubmagneten (16) bewegten Mitnehmers (17) drehbar ist.

4. Vorrichtung nach einem der vorangehenden Ansprüche, **gekennzeichnet durch** einen Drehfilteraufsatz (26) bzw. Ringaufsätze (25) mit Bohrungen (28) zur Aufnahme von kontaminationsanreichendem Material (27), insbesondere Adsorbermaterial, die den Drehtellerbonrungen (5) gegenüberstehen.

5. Vorrichtung nach einem der vorangehenden Ansprüche, **gekennzeichnet durch** zumindest einen den Bohrungen des Drehtellers (4) zugeordneten ortsfesten oder längs des Bohrungsplatzkranzes des Drehtellers (4) verfahrbaren Kontaminationsdetektor (13; 14).

6. Vorrichtung nach Anspruch 5,

**gekennzeichnet durch**
einen zum Saugkopf (7) winkelversetzt angeordneten Kontaminationsdetektor (13; 14).

7. Vorrichtung nach Anspruch 5 oder 6,
**gekennzeichnet durch**
ein Vorschubprogramm für den insgesamt n Schlitze oder Bohrungen aufweisenden Drehtellers (4) um jeweils Δn Schlitze oder Bohrungen (5), wobei n = z . Δn + 1 bzw. z . Δn - 1 ist, z die Zahl der Probennahmen je Tellerumlauf bedeutet und n + 1 bzw. n - 1 keine Primzahl sein darf.

8. Vorrichtung nach Anspruch 7,
**gekennzeichnet durch**
drei Detektoren (13, 14...), von denen der erste oberhalb des Saugkopfes (7), der zweite um Δn Bohrungen und der dritte um ≽ 5Δn Bohrungen dazu verschoben angeordnet ist.

9. Vorrichtung nach Anspruch 7 oder 8,
**gekennzeichnet durch**
eine Vorschubtaktzeit von 1 - 2 Tagen.

10. Vorrichtung zur Erfassung von ausfiltrierbaren Gaskontaminationen,
**gekennzeichnet durch**
zwei alternierend betreibbare gleiche Drehfilteranordnungen nach zumindest einem der Ansprüche 1 - 9.

11. Vorrichtung nach Anspruch 10,
**gekennzeichnet durch**
ein luftdichtes Gehäuse (1) für die Drehfilteranordnungen mit je einer gesonderten Kammer (2; 3) je Drehfilter, aus der die jeweilige Filteranordnung (2', 3') herausziehbar ist.

## Claims

1. Device for detecting gas contaminants which can be filtered out, by means of a circular filter ring track moved by a horizontal compact rotary disc via a suction head connected to a pump, characterised in that the compact rotary disc (4) supports the complete filter (6) collecting the contaminants and is provided along the circular ring track with holes or bores (5) which interact with the lip shape of the suction head (7) which is pressed against the plane-parallel underside of the rotary disc (4) by a spring-loaded mounting (18-21) which compensates alignment errors of the sealing surfaces.

2. Device according to Claim 1, characterised in that the holes or bores (5) are formed by a circle of closely adjacent, downward-tapering, rounded radial slots and that the broad suction lip (8) of the suction head (7) has a radial slot-like suction orifice (8', 29, 30) which corresponds to the lower slot cross-section and, in particular, is slightly larger.

3. Device according to Claim 1 or 2, characterised in that the rotary disc (4) is rigidly joined to a toothed rim (15) which is rotatable stepwise by means of a driver (17) moved by a lifting magnet (16).

4. Device according to one of the preceding claims, characterised by a rotary filter head (26) or ring heads (25) with bores (28) which are to receive contaminantenriching material (27), in particular adsorber material, and which are located opposite the rotary disc bores (5).

5. Device according to one of the preceding claims, characterised by at least one contaminant detector (13; 14) which is aligned with the bores of the rotary disc (4) and is fixed in position or movable along the bore place ring of the rotary disc (4).

6. Device according to Claim 5, characterised by a contamination detector (13; 14) arranged with an angular offset relative to the suction head (7).

7. Device according to Claim 5 or 6, characterised by a programme for advancing the rotary disc (4), having n slots or bores in total, by Δn slots or bores (5) each time, where n = z x Δn + 1 or z x Δn - 1, z is the number of samplings per disc revolution and n + 1 or n - 1 must not be a prime number.

8. Device according to Claim 7, characterised by three detectors (13, 14 ...), of which the first is arranged about the suction head (7), the second is arranged with an offset of Δn bores and the third with an offset of ≽ 5 Δn bores thereto.

9. Device according to Claim 7 or 8, characterised by an advancing cycle time of 1 - 2 days.

10. Device for detecting gas contaminants which can be filtered out, characterised by two identical rotary filter arrangements, which can be operated alternately, according to at least one of Claims 1 - 9.

11. Device according to Claim 10, characterised by an air-tight housing (1) for the rotary filter arrangements each with a separate chamber (2; 3) per rotary filter, from which the particular filter arrangement (21, 3') can be withdrawn.

**Revendications**

1.  Dispositif de détection dans des gaz de contaminants susceptibles d'être séparés par filtration, comprenant une voie de filtration, en forme d'anneau de cercle, déplacée, au moyen d'un plateau tournant, horizontal et compact au-dessus d'une tête d'aspiration avec raccordement à une pompe,, caractérisé en ce que le plateau tournant (4) compact soutient tout le filtre (6) collectant le contaminant et est muni, le long de la voie en forme d'anneau de cercle, de trous ou de perçages (5) qui coopèrent avec la forme en lèvres de la tête d'aspiration (7), laquelle est appliquée, au moyen d'un support à ressort (18 à 21) compensant un défaut d'alignement des surfaces d'étanchéité, au côté inférieur, parallèle à un plan, du plateau tournant (4).

2.  Dispositif suivant la revendication 1, caractérisé en ce que les trous ou perçages (5) sont formés par une couronne de fentes radiales, étroitement voisines, s'amincissant vers le bas et arrondies, et en ce que les lèvres d'aspiration (8) larges de la tête d'aspiration (7) comportent un orifice d'aspiration (8', 29, 30), analogue à une fente radiale, correspondant à la section transversale inférieure de la fente, et notamment légèrement plus grand.

3.  Dispositif suivant la revendication 1 ou 2, caractérisé en ce que le plateau tournant (4) est relié rigidement à une couronne dentée (15) qui peut tourner pas-à-pas au moyen d'un dispositif d'entraînement (17) déplacé par un électroaimant (16).

4.  Dispositif suivant l'une des revendications précédentes, caractérisé par une coiffe de filtre tournant (26) ou par des coiffes annulaires (25) ayant des perçages (28) de réception de matériau (27) enrichi en contaminants, notamment de matériau adsorbant, qui sont en face des perçages du plateau tournant (5).

5.  Dispositif suivant l'une des revendications précédentes, caractérisé par au moins un détecteur de contaminant (13, 14) associé à l'un des perçages du plateau tournant (4), à poste fixe ou mobile le long de la couronne d'emplacements des perçages du plateau tournant (4).

6.  Dispositif suivant la revendication 5, caractérisé par un détecteur de contaminant (13, 14) décalé angulairement par rapport à la tête d'aspiration (7).

7.  Dispositif suivant la revendication 5 ou 6, caractérisé par un programme d'avance pour le plateau tournant (4), présentant au total n fentes ou perçages, de chaque fois Dn fentes ou perçages (5), n étant égal à $z.Dn + 1$ ou à $z.Dn - 1$, z étant le nombre des prélèvements d'échantillons à chaque tour du plateau, $n + 1$ ou $n - 1$ ne devant pas être un nombre entier.

8.  Dispositif suivant la revendication 7, caractérisé par trois détecteurs (13, 14...) dont le premier est au-dessus de la tête d'aspiration (7), le second est décalé de Dn perçages et le troisième de 5Dn perçages ou de plus de 5Dn perçages.

9.  Dispositif suivant la revendication 7 ou 8, caractérisé par une durée de cycle d'avance de 1 à 2 jours.

10. Dispositif de détection dans des gaz de contaminants susceptibles d'être séparés par filtration, caractérisé par deux dispositifs à filtres tournants identiques, fonctionnant en alternance, suivant l'une au moins des revendications 1 à 9.

11. Dispositif suivant la revendication 10, caractérisé par un boîtier (1) étanche à l'air pour les agencements de filtres tournants avec une chambre (2, 3) propre à chaque filtre tournant, dont l'agencement de filtre (2, 3') peut être retiré.

FIG. 1

FIG. 2

FIG. 4

FIG. 3

FIG.5

FIG.6

FIG.7

FIG.8

FIG. 9

FIG.11

FIG. 10